# EUROPÄISCHE PATENTSCHRIFT

(11) **EP 0 854 791 B1**
(45) Veröffentlichungstag und Bekanntmachung des Hinweises auf die Patenterteilung: **23.06.1999**
(21) Anmeldenummer: 96934296.3
(22) Anmeldetag: 31.10.1996
(51) Int. Cl.: B60B 11/02

(54) **VORRICHTUNG ZUM LÖSBAREN BEFESTIGEN EINES ZUSÄTZLICHEN RADES AN EINEM RAD EINES FAHRZEUGS**
DEVICE FOR RELEASABLY SECURING AN ADDITIONAL WHEEL TO A VEHICLE WHEEL
DISPOSITIF POUR FIXER DE MANIERE AMOVIBLE UNE ROUE SUPPLEMENTAIRE SUR LA ROUE D'UN VEHICULE

(30) Priorität: 03.11.1995 CH 312595
(43) Veröffentlichungstag der Anmeldung: 29.07.1998
(73) Patentinhaber: Gebr. Schaad AG Räderfabrik, 4553 Subingen (CH)
(72) Erfinder: SCHAAD, Fritz, Johann, CH-4553 Subingen (CH); SCHAAD, Rudolf, CH-4707 Deitingen (CH)
(74) Vertreter: BOVARD AG - Patentanwälte
(86) Internationale Anmeldenummer: CH9600384
(87) Internationale Veröffentlichungsnummer: WO9717215

(56) Entgegenhaltungen:
- EP-A- 0 084 979
- EP-A- 0 094 916
- EP-A- 0 572 876
- FR-A- 2 505 742
- US-A- 3 836 202

## Beschreibung

Die vorliegende Erfindung bezieht sich auf eine Vorrichtung zum lösbaren Befestigen eines zusätzlichen Rades an einem Rad eines Fahrzeugs, insbesondere landwirtschaftlichen Fahrzeugs, gemäss dem Oberbegriff des Patentanspruchs 1.

Bei landwirtschaftlichen Fahrzeugen ist es oftmals erforderlich, zum Bestellen von Feldern die Auflagefläche der Räder zu vergrössern, um die Bodenpressung geringer zu halten. Dies wird durch Anbringen jeweils eines zusätzlichen Rades an die Räder des Fahrzeugs erreicht. Das Anbringen und das Wegnehmen dieser zusätzlichen Räder soll rasch und ohne grossen Aufwand möglich sein, da oftmals das Befahren von Strassen mit angebrachten zusätzlichen Rädern wegen einer übergrossen Breite nicht erlaubt ist. Demzufolge soll das Anbringen und Wegnehmen der zusätzlichen Räder beispielsweise auch auf dem Feld vorgenommen werden können.

Auch bei anderen Fahrzeugen, beispielsweise Baumaschinen, die sich in Gelände bewegen müssen, kann es vorteilhaft sein, wenn die Auflagefläche der Räder vergrössert werden kann, um beispielsweise ein Einsinken in einem weichen Untergrund zu vermeiden. Hierfür kann die gleiche Vorrichtung verwendet werden, wie für die genannten landwirtschaftlichen Fahrzeuge.

Derartige Vorrichtungen sind bekannt. Hierbei werden am Rad des Fahrzeuges, vorzugsweise an der Radschüssel, über den Umfang verteilt Ringschrauben angebracht. In den Ring dieser Schrauben greift jeweils ein Haken ein, der an einem Ende der Zugstange angeformt ist. Das andere Ende der Zugstange greift in einen spannbaren Haken ein, welcher in die Felge des zusätzlichen Rades einhängbar ist, und welcher über einen Spannhebel festspannbar ist. Hierdurch wird das zusätzliche Rad gegen eine zwischen den beiden Rädern angebrachte Distanzhülse und mit dieser auf das Rad des Fahrzeuges gespannt. Die Einstellung der Lange der Spannmittel erfolgt durch Verdrehen der Zugstange, welche über ein Gewinde in das Spannelement eingeschraubt ist. Eine derartige Vorrichtung ist beispielsweise in der gattungsgemäß EP-A-0 084 979 dargestellt, bei der weiterhin der Ankerteil mit einer im der Felge abgewandten Bereich versehenen Öffnung ausges tattet ist, und in die Öffnung ein am Ende der Zugstange angebrachtes Teil eingesetzt ist, welches auf einem Teil des Ankerteils abgestützt ist.

Eine ähnliche Einrichtung ist in der US-A-3 836 202 dargestellt. Auch hier wird eine Zugsstange verwendet, deren eines Ende als Haken ausgebildet ist und in eine ringförmige, am Rad befestigten Schraube einhängbar ist. Das andere Ende der Zugstange ist mit einem Gewinde versehen, auf welches eine Spannmutter aufgeschraubt ist, die auf einer im zusätzlichen Rad einhängbarer Klaue abgestützt ist. Zum Spannen der Spannmittel muss die Spannmutter mittels Schraubschlüssel angezogen werden.

Ueber diese über den Umfang verteilt angeordneten Spannmittel der bekannten Vorrichtung müssen auch die Antriebskräfte des Rades auf das zusätzliche Rad übertragen werden. Demzufolge ist die aufzunehmende Kraft der Spannmittel relativ gross. Dies bedeutet, dass der Haken, welcher in die Ringschraube einhängbar ist, gross dimensioniert werden muss oder dass die Anzahl der Spannmittel, die für ein Befestigen eines zusätzlichen Rades vorgesehen sind, erhöht wird. Trotzdem besteht die Gefahr, dass der Haken eines einzelnen Spannmittels aufgebogen wird oder sogar bricht.

Die Aufgabe der vorliegenden Erfindung besteht nun darin, die Kraftübertragung von Zugstange auf Ankerteil derart zu verbessern, dass die entsprechenden Elemente kleiner dimensioniert werden können, so dass Material eingespart werden kann, oder dass bei gleicher Dimensionierung die Anzahl der Spannmittel pro Rad reduziert werden kann, so dass Kosten eingespart werden können und das Anbringen und Wegnehmen des Zusatzrades mit geringerem Aufwand durchführbar ist.

Erfindungsgemäss erfolgt die Lösung dieser Aufgabe durch die in der Kennzeichnung des Anspruchs 1 angegebenen Merkmale.

In vorteilhafter Weise ist die innere Ringfläche des Ankerteils, auf welchem der Kopf der Zugstange abgestützt ist, konkav kugelförmig ausgebildet, wobei der Kopf mit einer entsprechenden kugeligen Form ausgestattet ist. Dadurch kann die Kraftübertragung auch in optimaler Weise erfolgen, wenn die Zugstange sich bezüglich des Ankerteils in einer geneigten Stellung befindet, wozu der Durchgang des Ankerteils eine nach aussen sich öffnende Kegelform aufweist. Derartige Schrägstellungen können sich insbesondere bei angetriebenen Rädern ergeben, in dem sich das zusätzliche Rad relativ zum Rad des Fahrzeugs verdreht und durch die Schrägstellung der Zugstangen der Spannmittel der Anpressdruck des zusätzlichen Rades vergrössert wird.

Indem der Ankerteil mit einer quer von aussen her bis zum Durchgang verlaufenden Ausnehmung versehen ist, so dass der Kopf der Zugstange seitlich aus dem Ankerteil aus- bzw. in diesen eingefahren werden kann, ist ein einfaches Anbringen und Wegnehmen des Zusatzrades möglich. Zudem können beispielsweise die Ankerteile am Rad befestigt bleiben, auch wenn das zusätzliche Rad nicht montiert ist.

Eine vorteilhafte Ausgestaltung der Erfindung besteht darin, dass der Ankerteil auf der Rückseite eine mit einem Gewinde versehene Bohrung aufweist, mittels welcher der Ankerteil an das Rad des Fahrzeugs festgeschraubt werden kann.

Um eine grössere Festigkeit des Uebergangs Ankerteil-Kopf der Zugstange zu erreichen, wird in vorteilhafter Weise die Verengung mit der Ringfläche, auf der der Kopf abgestützt ist, in entgegengesetzter Richtung der quer zum Durchgang verlaufenden Ausnehmung gegen die verbleibende Wandung des Ankerteils hin versetzt. Hierdurch ergeben sich im Bereich der Ausnehmung stärkere Seitenwände.

Weitere vorteilhafte Ausgestaltungen der Erfindung ergeben sich aus den weiteren abhängigen Ansprüchen.

Eine Ausführungsform der erfindungsgemässen Vorrichtung wird nachfolgend anhand der beiliegenden Zeichnung beispielhaft näher erläutert.

Es zeigt
Fig. 1 eine Schnittdarstellung durch ein Rad eines Fahrzeuges mit einem daran über Spannmittel befestigten zusätzlichen Rad;
Fig. 2 eine Seitenansicht auf ein Spannmittel mit dem Verankerungsteil, zum Teil geschnitten;
Fig. 3 eine Draufsicht auf das Spannmittel mit Verankerungsteil gemäss Fig. 2; und
Fig. 4 eine Ansicht von oben auf den Verankerungsteil.

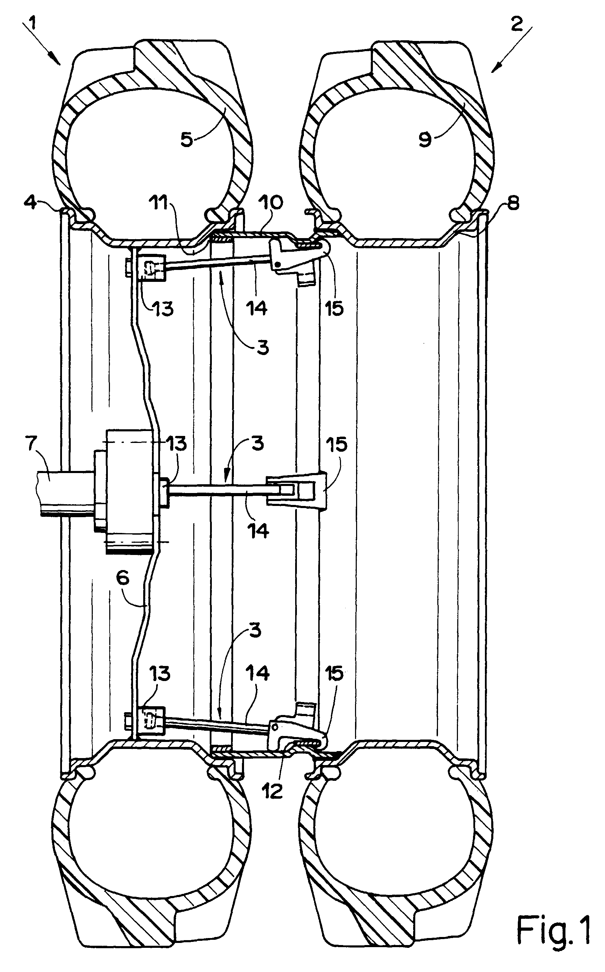

In Fig. 1 ist ein Rad 1 mit einem über Spannmittel 3 daran befestigten zusätzlichen Rad 2 dargestellt. Das Rad 1 besteht aus einer Felge 4, auf welcher ein Pneu 5 aufgezogen ist. Im Innern der Felge 4 ist eine Radschüssel 6 befestigt, mittels welcher das Rad 1 beispielsweise an der Antriebswelle 7 eines nicht dargestellten Fahrzeugs mittels Schrauben befestigt ist.

Das zusätzliche Rad 2 besteht ebenfalls aus einer Felge 8, auf welche ein Pneu 9 aufgezogen ist. An der Felge 8 des zusätzlichen Rades 2 ist eine Distanzhülse 10 befestigt. Diese Distanzhülse 10 stützt sich auf einer Schulter 11 der Felge 4 des Rades 1 ab, wenn das zusätzliche Rad 2 am Rad 1 angebracht ist.

Auf der inneren Seite der Distanzhülse 10 ist ein umlaufender Steg 12 angebracht, der fest mit der Distanzhülse 10 verbunden ist.

An der Radschüssel 6 sind verteilt über den Umfang, vorzugsweise in der Nähe der Felge 4, Ankerteile 13 der Spannmittel 3 befestigt. Durch jeden Ankerteil 13 kann ein Endbereich einer Zugstange 14 gehalten werden, dessen anderer Endbereich mit einem Spannelement 15 ausgestattet ist. Jedes Spannelement 15 kann in den umlaufenden Steg 12 der Distanzhülse 10 eingehängt und gespannt werden, wodurch das zusätzliche Rad 2 mit der Distanzhülse 10 gegen das Rad 1 gespannt wird. Ueber den Umfang eines Rades 1 können mehrere Spannmittel 3 angeordnet werden, abhängig von der Grösse der zu verbindenden Räder 1 und 2, von der Dimensionierung der Spannmittel 3 und der Grösse der zu übertragenden Kräfte. Für geringe Anforderungen genügen zwei Spannmittel 3, für grosse Anforderungen können es vier Spannmittel 3 oder mehr sein.

Es ist auch denkbar, dass bei kleineren Rädern 1 und 2, insbesondere wenn sie nicht angetrieben sind, nur ein Spannmittel 3 verwendet wird, das im Zentrum der Räder 1 und 2 angebracht wird. Hierzu könnte das zusätzliche Rad 2 ebenfalls mit einer Radschüssel versehen sein, in dessen Zentrum ein Einhängeelement für das Spannelement 15 angeordnet wäre.

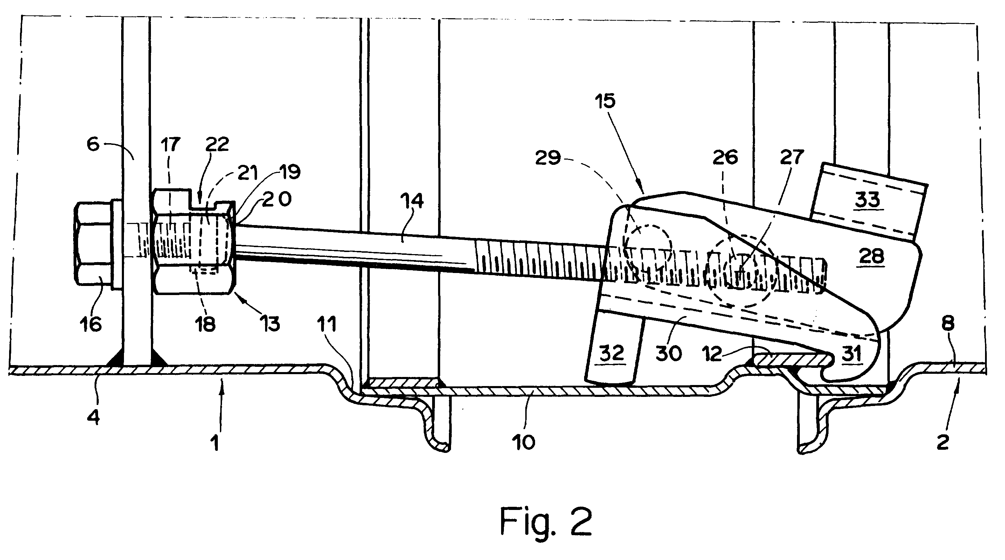

Aus Fig. 2 ist die Felge 4 des Rades 1 ersichtlich, an welcher die Radschüssel 6 befestigt ist. Mittels Schraube 16 ist der Ankerteil 13 an der Radschüssel 6 befestigt, indem diese Schraube in eine mit einem Gewinde versehenen Bohrung 17 des Ankerteils 13 eingreift. Der Ankerteil 13 weist eine Oeffnung 18 auf, die mit einem eine Verengung 19 aufweisenden Durchgang 20 ausgestattet ist. Durch die Verengung 19 wird ein Kopf 21 der Zugstange 14 gehalten.

Der Ankerteil 13 weist eine quer von aussen her bis zum Durchgang 20 verlaufende Ausnehmung 22 auf, durch welche der Kopf 21 der Zugstange 14 seitlich aus dem Ankerteil 13 im unbelasteten Zustand aus- bzw. in diesen eingefahren werden kann.

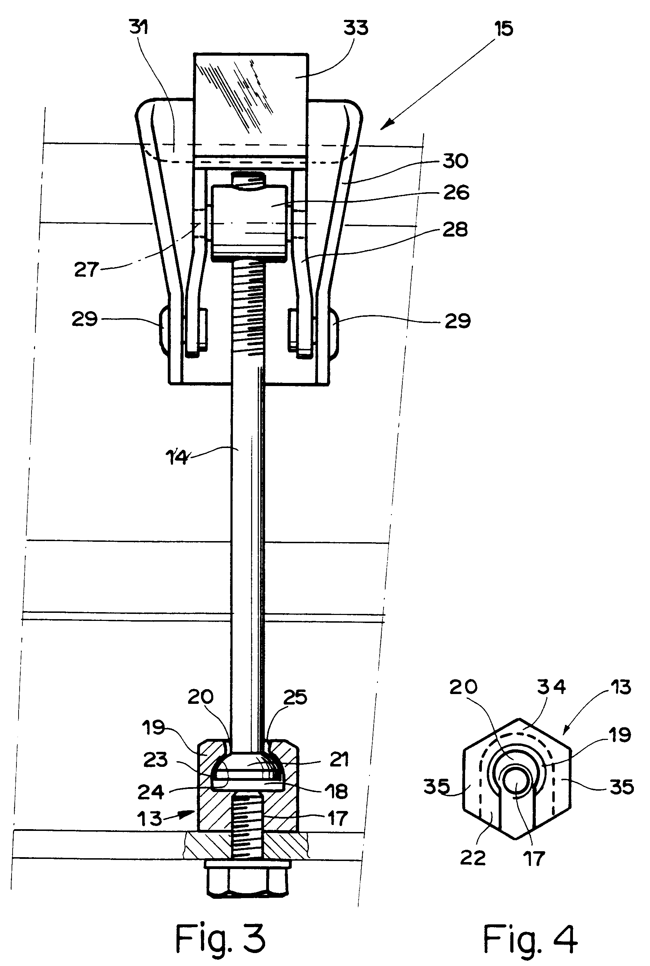

Wie insbesondere aus Fig. 3 ersichtlich ist, ist die Verengung 19 des Ankerteils 13 mit einer konkav kugelförmig ausgebildeten inneren Ringfläche 23 ausgestattet. Der Kopf 21 der Zugstange 14 weist eine entsprechende konvexe kugelige Form 24 auf, die mit der Ringfläche 23 zusammenwirkt. Der Durchgang 20 des Ankerteils 13 ist mit einer nach aussen sich öffnenden Kegelform 25 versehen. Durch die kugelförmige Ausgestaltung der inneren Ringfläche 23 und des Kopfes 21 und durch die Kegelform 25 des Durchganges 20 kann die Zugstange 14 bezüglich des Ankerteils 13 in jede Richtung um ein bestimmtes Mass geneigt werden, wobei auch im geneigten Zustand die Kraftübertragung von Zugstange 14 auf den Ankerteil 13 immer optimal ist.

Wie aus Fig. 2 und 3 ersichtlich ist, ist der dem Kopf 21 abgewandte Bereich der Zugstange 14 mit einem Gewinde versehen. Damit kann die Zugstange 14 in eine Gewindebüchse 26 eingeschraubt werden, die um eine Achse 27 schwenkbar in einem Spannhebel 28 des Spannelementes 15 gehalten ist. Der Spannhebel 28 ist seinerseits mittels Gelenkbolzen 29 schwenkbar mit dem Spannhaken 30 verbunden.

Durch das Einschrauben der Zugstange 14 in die Gewindebüchse 26 des Spannelementes 15 kann die Distanz zwischen Ankerteil 13 und Spannelement 15 genau eingestellt werden, so dass die Spannkraft optimal wird. Diese genaue Einstellung wird durch den Kopf 21 ermöglicht, der in jeder Drehlage optimal im Ankerteil 13 gehalten ist.

In Fig. 2 ist das Spannelement 15 im gespannten Zustand dargestellt, was bedeutet, dass der Spannhaken 30 im umlaufenden Steg 12 der Distanzhülse 10 eingehängt ist und die Felge 8 des zusätzlichen Rades 2 über die Distanzhülse 10 gegen das Rad 1 gespannt ist, wobei sich die Distanzhülse 10 auf der Schulter 11 der Felge 4 des Rades 1 abstützt. Der Spannhaken 30 weist an seinem dem Haken 31 abgewandten Bereich einen Stützfuss 32 auf, der dafür sorgt, dass dieser Bereich des Spannhakens 30 von der Distanzhülse 10 beabstandet ist.

Zum Lösen des Spannelementes 15 wird in die Lasche 33 des Spannhebels 28 eine Hilfsstange eingeschoben, womit der Spannhebel 28 um die Achse 27 der Gewindebüchse 26 gegen den Uhrzeigersinn hochgeschwenkt wird. Der Gelenkbolzen 29 beschreibt hierbei einen Bogen, wodurch der Spannhaken 30 gegen das zusätzliche Rad 2 hin bewegt wird und der Haken 31 aus dem Steg 12 ausfährt. Das Einspannen erfolgt in umgekehrter Reihenfolge.

Wie aus Fig. 4 ersichtlich ist, ist die Verengung 19 mit dem Durchgang 20 in entgegengesetzter Richtung der quer von aussen her bis zum Durchgang 20 verlaufenden Ausnehmung 22 gegen die verbleibende Wandung 34 des Ankerteils 13 hin versetzt angeordnet. Dadurch ergeben sich im Bereich der Ausnehmung stärkere Seitenwände 35, wodurch die Zugfestigkeit des Ankerteils 13 im Bereich des Kopfes 21 verbessert wird.

Der Ankerteil 13 kann im wesentlichen eine beliebige Umfangsform aufweisen. In vorteilhafter Weise ist diese Umfangsform sechseckig, so dass der Ankerteil 13 zum Aufschrauben auf die Radschüssel 6 mit einem Sechskantschlüssel gehalten werden kann.

Mit dieser Vorrichtung lassen sich die Zugkräfte, die beim Aufsetzen eines zusätzlichen Rades 2 auf das Rad 1 ergeben, in optimaler Weise aufnehmen und übertragen. Das Anbringen und das Wegnehmen des zusätzlichen Rades 2 an das Rad 1 lassen sich in sehr einfacher Weise durchführen.

## Patentansprüche

1. Vorrichtung zum lösbaren Befestigen eines zusätzlichen Rades (2) an einem Rad (1) eines Fahrzeugs, insbesondere landwirtschaftlichen Fahrzeugs, mit einer Distanzhülse (10), welche beidseits auf jeweils einer Felge (4, 8) der beiden zu verbindenden Räder (1, 2) abgestützt ist, und mit Spannmitteln (3), die über den Umfang des Rades (1) verteilt angeordnet sind, mit welchen das zusätzliche Rad (2) über die Distanzhülse (10) gegen das Rad (1) spannbar ist, wobei jedes Spannmittel (3) einen Ankerteil (13) aufweist, welcher mit einer Radschüssel (6) der Felge (4) des Rades (1) verbunden ist und in welchen ein Ende einer Zugstange (14) einhängbar ist, und das gegenüberliegende Ende der Zugstange (14) mit einem Spannelement (15) ausgestattet ist, welches im wesentlichen in einen Teil der Felge (8) des zusätzlichen Rades (2) einhängbar und spannbar ist, dadurch gekennzeichnet, dass der Ankerteil (13) mit einer Oeffnung (18) versehen ist, die im der Felge (4) abgewandten Bereich mit einer einen Durchgang (20) aufweisenden Verengung (19) ausgestattet ist, dass in die Oeffnung (18) des Ankerteils (13) ein am einen Ende der Zugstange (14) angebrachter Kopf (21) eingesetzt ist, welcher auf der Verengung (19) der Oeffnung (18) des Ankerteils (13) abgestützt ist, und dass der Ankerteil (13) eine quer von aussen her bis zum Durchgang (20) verlaufende Ausnehmung (22) aufweist, durch welche der Kopf (21) mit der Zugstange (14) seitlich aus dem Ankerteil (13) ausfahrbar bzw. in diesen einfahrbar ist.

2. Vorrichtung nach Anspruch 1, dadurch gekennzeichnet, dass die Verengung (19) eine innere Ringfläche (23) aufweist, die konkav kugelförmig ausgebildet ist, und dass der mit dieser Ringfläche (23) zusammenwirkande Kopf (21) der Zugstange (14) eine entsprechende konvexe kugelige Form (24) aufweist, und dass der Durchgang (20) eine nach aussen sich öffnende Kegelform (25) aufweist.

3. Vorrichtung nach Anspruch 1 oder 2, dadurch gekennzeichnet, dass auf dem der Verengung (19) gegenüberliegenden Bereich des Ankerteils (13) mindestens eine mit einem Gewinde versehene Bohrung (17) vorgesehen ist.

4. Vorrichtung nach Anspruch 2 oder 3, dadurch gekennzeichnet, dass die Verengung (19) mit der Ringfläche (23) in entgegengesetzter Richtung der quer bis zum Durchgang (20) verlaufenden Ausnehmung (22) gegen die verbleibende Wandung (34) des Ankerteils (13) hin versetzt ist.

5. Vorrichtung nach einem der Ansprüche 1 bis 4, dadurch gekennzeichnet, dass die Spannelemente (15) an einem umlaufenden Steg (12), der mit dem zusätzlichen Rad verbunden ist, einhängbar und spannbar sind.

6. Vorrichtung nach einem der Ansprüche 1 bis 5, dadurch gekennzeichnet, dass die Zugstange (14) im dem Kopf (21) abgewandten Bereich ein Gewinde aufweist, welches in ein Durchgangsloch, das mit einem entsprechenden Gewinde ausgestattet ist, einer Gewindebüchse (26) des Spannelementes (15) einschraubbar ist.

7. Vorrichtung nach einem der Ansprüche 1 bis 6, dadurch gekennzeichnet, dass das Spannelement (15) über einen Spannhebel (28) mit der Zugstange (14) verbunden ist.

## Claims

1. Device for detachable fastening of an auxiliary wheel (2) to a wheel (1) of a vehicle, in particular an agricultural vehicle, with a distance sleeve (10) which is supported on both sides, in each case on a rim (4, 8) of the two wheels (1, 2) to be connected, and with tensioning means (3), which are disposed distributed about the circumference of the wheel (1), with which the auxiliary wheel (2) can be tensioned via the distance sleeve (10) against the wheel (1), each tensioning means (3) having an anchor part (13), which is connected to a wheel bowl (6) of the rim (4) of the wheel (1), and in which an end of a connecting rod (14) can be hung, and the opposite end of the connecting rod (14) being provided with a tensioning element (15), which can be hung and tensioned essentially in a part of the rim (8) of the auxiliary wheel (2), characterised in that the anchor part (13) is provided with an aperture (18), which in the area remote from the rim (4) is provided with a narrowing (19) having a passage (20), in that a head (21), mounted on one end of the connecting rod (14), is inserted into the aperture (18) of the anchor part (13), which head is supported on the narrowing (19) of the aperture (18) of the anchor part (13), and in that the anchor part (13) has a recess (22) running transversely from outside to the passage (20), through which recess the head (21) with the connecting rod (14) can be driven laterally out of, or respectively into, the anchor part (13).

2. Device according to claim 1, characterised in that the narrowing (19) has an inner annular surface (23) which is shaped concave spherical, and in that the head (21) of the connecting rod (14) co-operating with this annular surface (23) has a corresponding convex, spherical shape (24), and in that the passage (20) has an outwardly opening conical shape (25).

3. Device according to claim 1 or 2, characterised in that provided on the region of the anchor part (13) opposite the narrowing (19) is at least one bore (17) provided with a threading.

4. Device according to claim 2 or 3, characterised in that the narrowing (19) with the annular surface (23) is set back toward the remaining walling (34) of the anchor part (13) in the direction opposite to the recess (22) running transversely all the way to the passage (20).

5. Device according to one of the claims 1 to 4, characterised in that the tensioning elements (15) can be hung and tensioned on a surrounding web plate (12) which is connected to the auxiliary wheel.

6. Device according to one of the claims 1 to 5, characterised in that the connecting rod (14) has a threading in the area remote from the head (21), which threading can be screwed into a passage hole, provided with a corresponding threading, of a threaded bushing (26) of the tensioning element (15).

7. Device according to one of the claims 1 to 6, characterised in that the tensioning element (15) is connected to the connecting rod (14) via a tension lever (28).

## Revendications

1. Dispositif servant à fixer de manière amovible une roue supplémentaire (2) sur une roue (1) d'un véhicule, en particulier un véhicule agricole, comportant un manchon intercalaire (10) qui s'appuie de chaque côté sur l'une des jantes (4, 8) des deux roues (1, 2) que l'on veut relier, et pourvu de moyens de serrage (3) répartis sur la circonférence de la roue (1) et qui permettent de serrer la roue supplémentaire (2) contre la roue (1) par l'intermédiaire du manchon intercalaire (10), chaque organe de serrage (3) possédant une pièce d'ancrage (13) qui est fixée à un voile de roue (6) de la jante (4) de la roue (1), et dans lequel une extrémité d'une barre de traction (14) peut être accrochée et l'extrémité opposée de la barre de traction (14) est pourvue d'un organe de serrage (15) qui peut être essentiellement accroché et serré sur une partie de la jante (8) de la roue supplémentaire (2), caractérisé en ce que la pièce d'ancrage (13) est pourvue d'une ouverture (18) qui, dans la partie opposée à la jante (4), présente une partie rétrécie (19) ayant un passage (20), en ce qu'une tête (21) montée à l'extrémité de la barre de traction (14) est placée dans l'ouverture (18) de la pièce d'ancrage (13) et s'appuie sur la partie rétrécie (19) de l'ouverture (18) de la pièce d'ancrage (13), et en ce que la pièce d'ancrage (13) présente une encoche (22) transversale, qui va de l'extérieur jusqu'au passage (20), par laquelle la tête (21), avec la barre de traction (14), peut être extraite latéralement de la pièce d'ancrage (13) ou y être introduite de la même façon.

2. Dispositif selon la première revendication, caractérisé en ce que la partie rétrécie (19) présente une surface annulaire intérieure (23) qui est de forme sphérique concave, en ce que la tête (21) de la barre de traction (14) qui agit de concert avec cette surface annulaire (23) a une forme sphérique convexe correspondante (24), et en ce que le passage (20) a la forme d'un cône (25) qui s'ouvre vers l'extérieur.

3. Dispositif selon la revendication 1 ou 2, caractérisé en ce que, dans la partie de la pièce d'ancrage (13) opposée à la partie rétrécie (19), il y a au moins un trou taraudé (17).

4. Dispositif selon la revendication 2 ou 3, caractérisé en ce que la partie rétrécie (19), avec la surface annulaire (23), est décalée, par rapport à la paroi restante (34) de la pièce d'ancrage (13), en sens inverse de l'encoche (22), qui est transversale jusqu'au passage (20).

5. Dispositif selon l'une des revendications 1 à 4, caractérisé en ce que les organes de serrage (15) peuvent être accrochés et tendus à un rebord circulaire (12) qui est fixé sur la roue supplémentaire.

6. Dispositif selon l'une des revendications 1 à 5, caractérisé en ce que la barre de traction (14) est pourvue, dans sa partie opposée à la tête (21), d'un filetage qui peut être vissé dans un trou traversant, présentant un filetage correspondant, d'une douille filetée (26) de l'organe de serrage (15).

7. Dispositif selon l'une des revendications 1 à 6, caractérisé en ce que l'organe de serrage (15) est relié à la barre de traction (14) par un lever de serrage (28).
